# EUROPÄISCHE PATENTANMELDUNG

(11) **EP 1 458 199 A1**
(43) Veröffentlichungstag der Anmeldung: **15.09.2004**
(21) Anmeldenummer: 04000561.3
(22) Anmeldetag: 14.01.2004
(51) Int. Cl.: H04Q 7/22, H04M 1/725

(54) **Mobilfunkendgerät und Verfahren zum Versenden langer Textnachrichten**

(30) Priorität: 11.03.2003 DE 10311676
(71) Anmelder: DeTeWe - Deutsche Telephonwerke Aktiengesellschaft & Co. KG, 10997 Berlin (DE)
(72) Erfinder: Balow, Peter, Dipl.-Ing., 12559 Berlin (DE); Petersen, Mike, Dipl.-Ing., 24582 Wattenbek (DE)

(57) **Zusammenfassung**

Die Erfindung bezieht sich auf ein Mobilfunkendgerät (10) mit einer Eingabeeinrichtung (50) zum Eingeben von aus alphanumerischen Zeichen bestehenden Textnachrichten, mit einer Steuereinrichtung (40), die aus den eingegebenen Zeichen Datenpakete nach einem vorgegebenen Datenpaketstandard erzeugt, und mit einer Sendeeinrichtung (30), die die Datenpakete aussendet.

Der Erfindung liegt die Aufgabe zugrunde, ein Mobilfunkendgerät anzugeben, mit dem sich auch längere Textnachrichten relativ einfach eingeben und aussenden lassen.

Diese Aufgabe wird erfindungsgemäß dadurch gelöst, dass die Steuereinrichtung (40) derart ausgestaltet ist, dass sie die eingegebenen Zeichen selbsttätig in Zeichenblöcke unterteilt, sofern die Anzahl der eingegebenen Zeichen eine durch den Datenpaketstandard vorgegebenen Grenzwert erreicht oder überschreitet, und selbsttätig aus jedem der so gebildeten Zeichenblöcke jeweils ein Datenpaket bildet:

## Beschreibung

Die Erfindung bezieht sich auf ein Mobilfunkendgerät mit den Merkmalen gemäß dem Oberbegriff des Anspruchs 1.

Mobilfunkendgeräte der vorbezeichneten Art sind allgemein erhältlich und werden umgangssprachlich als "Handys mit SMS-Funktion" bezeichnet. Bei den vorbekannten Mobilfunkendgeräten wird die Nummerntastatur zum Eingeben der Rufnummern gleichzeitig als Eingabeeinrichtung zum Eingeben einer aus alphanumerischen Zeichen bestehenden Textnachricht benutzt. Hierzu sind auf den Nummerntasten jeweils die entsprechenden Buchstaben aufgedruckt, die durch Drücken der jeweiligen Taste eingegeben werden können. Die vorbekannten Mobilfunkendgeräte weisen darüber hinaus eine Steuereinrichtung auf, die aus den eingegebenen alphanumerischen Zeichen sogenannte "SMS-Nachrichten" als "Datenpakte" erzeugen. Die Abkürzung "SMS" bedeutet dabei "short message service". Die nach dem SMS-Standard als Datenpaketstandard erzeugten SMS-Nachrichten werden dann mit dem Mobilfunkendgerät ausgesandt.

Mobilfunkendgeräte der vorbekannten Art weisen den Nachteil auf, dass bei SMS-Nachrichten maximal lediglich 160 alphanumerische Zeichen pro Einzelnachricht übersandt werden können. Längere Textnachrichten können in einer einzigen SMS nicht übermittelt werden.

Der Erfindung liegt die Aufgabe zugrunde, ein Mobilfunkendgerät anzugeben, mit dem sich Textnachrichten mit mehr als durch den vorgegebenen Datenpaketstandard bzw. "Textnachrichten-Standard" zugelassenen alphanumerischen Zeichen einfach und bedienerfreundlich übermitteln lassen.

Diese Aufgabe wird erfindungsgemäß durch die kennzeichnenden Merkmale des Anspruchs 1 gelöst. Vorteilhafte Ausgestaltungen des erfindungsgemäßen Mobilfunkendgerätes sind in Unteransprüchen angegeben.

Danach ist erfindungsgemäß vorgesehen, dass die Steuereinrichtung derart ausgestaltet ist, dass sie die eingegebenen Zeichen selbsttätig in Zeichenblöcke unterteilt, sofern die Anzahl der eingegebenen Zeichen eine durch den Datenpaketstandard ( = "Textnachrichten-Standard") vorgegebenen Grenzwert erreicht oder überschreitet, und dass sie selbsttätig aus jedem der so gebildeten Zeichenblöcke jeweils ein Datenpaket ("Sub"-Nachricht) bildet und dass sie die so gebildeten Datenpakete ("Sub"-Nachrichten) nacheinander aussendet.

Ein wesentlicher Vorteil des erfindungsgemäßen Mobilfunkendgerätes besteht darin, dass mit diesem auch Textnachrichten übermittelt werden können, deren Zeichenanzahl einen durch den Datenpaketstandard vorgegebenen Grenzwert überschreitet. Dies wird erfindungsgemäß durch die Steuereinrichtung erreicht, die die Textnachricht in separate Zeichenblöcke unterteilt, sofern die Anzahl der eingegebenen Zeichen zu groß ist und die zulässige Maximalzahl - vorgegeben durch den Datenpaket- bzw. Textnachrichten- Standard - überschreitet. Das Aufsplitten der Textnachricht in separate Zeichenblöcke und das anschließende Bilden der separaten Datenpakete erfolgt dabei automatisch durch das Mobilfunkendgerät, so dass der Benutzer des Mobilfunkendgerätes für die Aufteilung seiner Textnachricht in separate Datenpakete nicht selbst sorgen muss. Die Benutzung des erfindungsgemäßen Mobilfunkendgerätes ist also insgesamt sehr bequem, selbst wenn Textnachrichten eingegeben werden, deren Zeichenanzahl einen vorgegebenen Grenzwert überschreiten.

Das Eingeben der aus alphanumerischen Zeichen bestehenden Textnachrichten kann beispielsweise über die Nummemtastatur des Mobilfunkendgerätes erfolgen, so dass es als vorteilhaft angesehen wird, wenn die Eingabeeinrichtung durch die Nummemtastatur des Mobilfunkendgerätes gebildet ist.

Alternativ kann das Mobilfunkendgerät mit einer Schnittstelle ausgestattet sein, die sich an ein externes Gerät anschließen lässt; die alphanumerischen Zeichen können dann mit dem externen Gerät in das Mobilfunkendgerät eingespeist werden. Eine solche Schnittstelle zum Anschließen eines externen Gerätes ist insbesondere dann von Vorteil, wenn das Mobilfunkendgerät sehr klein ist und somit eine nur sehr kleine Eingabetastatur aufweist und daher die Eingabe von längeren Textnachrichten sehr unbequem wäre.

Zur Übermittlung von Textnachrichten hat sich allgemein insbesondere der sogenannte SMS-Standard bewährt und durchgesetzt, so dass es als vorteilhaft angesehen wird, wenn das Mobilfunkendgerät nach dem SMS-Standard als Datenpaketstandard arbeitet und die gebildeten und ausgesandten Datenpakete SMS-Nachrichten sind.

Vorteilhaft ist das Mobilfunkendgerät derart ausgestaltet, dass es zunächst die vollständige Eingabe aller alphanumerischen Zeichen einer Textnachricht abwartet und erst anschließend die daraus gebildeten Datenpakete aussendet. Bei einer solchen Ausgestaltung des Mobilfunkendgerätes ist eine Eingabe des Empfängers der Textnachricht erst erforderlich, nachdem die Textnachricht vollständig eingegeben worden ist.

Alternativ kann das Mobilfunkendgerät derart ausgestaltet sein, dass es nach der Eingabe einer dem Grenzwert bzw. der Maximalzahl entsprechenden Anzahl von alphanumerischen Zeichen aus diesen jeweils sofort ein Datenpaket nach dem-vorgegebenen Datenpaketstandard selbsttätig erzeugt und dieses noch während der Eingabe weiterer alphanumerischer Zeichen durch den Benutzer aussendet. Ein wesentlicher Vorteil dieser Ausgestaltung des Mobilfunkendgerätes ist darin zu sehen, dass der Empfänger der Textnachricht diese - zumindest teilweise - schon lesen kann, während der Benutzer des Mobilfunkendgerätes noch weitere Teile seiner Textnachricht in das Mobilfunkendgerät eingibt. Mit anderen Worten muss also nicht abgewartet werden, bis die Textnachricht vollständig eingegeben worden ist, bevor mit dem Aussenden von Teilen der Textnachricht begonnen wird.

Im Übrigen wird es als vorteilhaft angesehen, wenn das Mobilfunkendgerät derart ausgestaltet ist, dass es die Eingabe des Empfängers, für den die Textnachricht bestimmt ist, anfordert, bevor die Eingabe einer Textnachricht zugelassen wird. Bei dieser Ausgestaltung des Mobilfunkendgerätes ist sichergestellt, dass mit dem Aussenden von "Teil-Nachrichten" begonnen werden kann, sobald die Anzahl der eingegebenen alphanumerischen Zeichen die durch den Datenpaketstandard vorgegebenen Grenzwert erreicht; ansonsten wäre dies mangels "Empfängerangabe" unmöglich.

Bei dem Mobilfunkendgerät-kann es sich vorteilhaft- um ein Gerät handeln, das - bezüglich seines Funkstandards - nach dem GSM-Standard, nach dem DECT-Standard oder nach einem anderen Mobilfunkstandard arbeitet.

Die Erfindung bezieht sich darüber hinaus auf ein Verfahren mit den Merkmalen gemäß dem Oberbegriff des Anspruchs 11. Ein solches Verfahren ist im Zusammenhang mit dem Betrieb der eingangs erläuterten, vorbekannten Mobilfunkendgeräte bekannt.

Bezüglich eines solchen Verfahrens liegt der Erfindung die Aufgabe zugrunde, zu ermöglichen, dass auch Textnachrichten mit einer Zeichenanzahl, die eine durch den Datenpaketstandard vorgegebene Maximalzahl überschreitet, bequem und einfach erzeugt und ausgesandt werden können.

Diese Aufgabe wird erfindungsgemäß durch die kennzeichnenden Merkmale des Anspruchs 11 gelöst. Vorteilhafte Ausgestaltungen des erfindungsgemäßen Verfahrens sind in Unteransprüchen angegeben.

Danach ist erfindungsgemäß vorgesehen, dass die Anzahl der eingegebenen alphanumerischen Zeichen während der Eingabe fortlaufend überprüft wird und aus den eingegebenen alphanumerischen-Zeichen ein Datenpaket gebildet und dieses ausgesandt wird, sobald die Anzahl der eingegebenen alphanumerischen Zeichen einen durch den Datenpaketstandard vorgegebenen Grenzwert erreicht. Das Bilden und Aussenden der Datenpakete wird dabei solange fortgesetzt, bis die gesamte Textnachricht vollständig ausgesandt worden ist.

Ein wesentlicher Vorteil des erfindungsgemäßen Verfahrens besteht darin, dass noch während der Eingabe der Textnachricht der jeweils erste Teil der Textnachricht bzw. die jeweils ersten Teile der Textnachricht den Empfänger der Textnachricht erreichen, noch bevor die Eingabe der vollständigen Textnachricht abgeschlossen worden ist. Es muss somit bei dem erfindungsgemäßen Verfahren nicht abgewartet werden, bis die gesamte Textnachricht vollständig eingegeben worden ist, bevor mit dem Bilden der Datenpakete und dem Aussenden (von Teilen) der Textnachricht begonnen werden kann.

Zur Erläuterung der Erfindung zeigen
- Figur 1: ein Ausführungsbeispiel für ein erfindungsgemäßes Mobilfunkendgerät, das ebenfalls zum Durchführen des erfindungsgemäßen Verfahrens geeignet ist, und
- Figur 2: ein Flussdiagramm für ein Ausführungsbeispiel des erfindungsgemäßen Verfahrens.

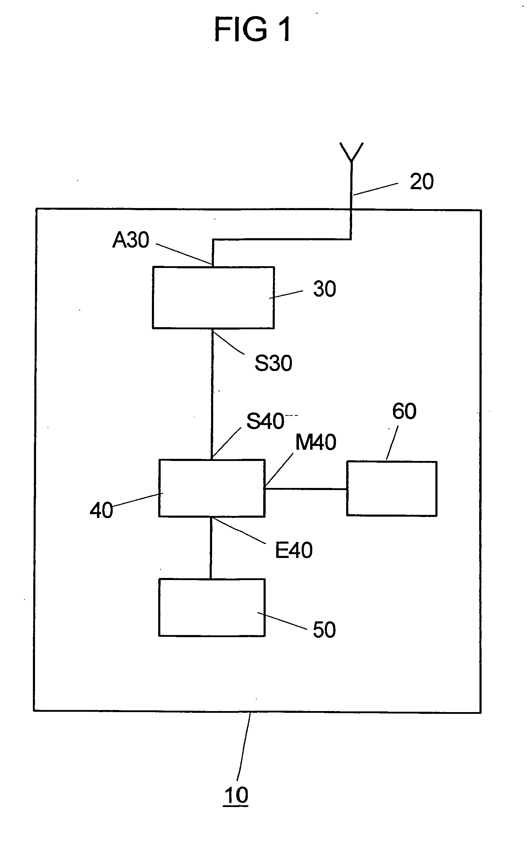

In der Figur 1 erkennt man ein Mobilfunkendgerät 10, das mit einer Antenne 20 und einer Sende-/Empfangseinrichtung 30 ausgestattet ist. Die Antenne 20 ist dabei an einen Antennenanschluss A30 der Sende- und Empfangseinrichtung angeschlossen.

Die Sende-/Empfangseinrichtung 30 weist darüber hinaus einen Steueranschluss S30 auf, der mit einem Steueranschluss S40 einer Steuereinrichtung 40 verbunden ist.

Die Steuereinrichtung 40 ist außerdem mit einem Eingang E40 ausgestattet, an den eine Eingabeeinrichtung 50 angeschlossen ist. Die Eingabeeinrichtung 50 kann beispielsweise durch die Nummerntastatur des Mobilfunkendgerätes 10 gebildet sein.

Das Mobilfunkendgerät 10 weist außerdem einen Speicher 60 auf, der mit einem Speicheranschluss M40 der Steuereinrichtung 40 verbunden ist.

Die Steuereinrichtung 40 kann beispielsweise durch einen Mikroprozessor gebildet sein, dessen Steuerprogramme in dem Speicher 60 hinterlegt sind.

Die Steuereinrichtung 40 stellt zum Senden von SMS-Nachrichten folgende zwei Betriebsarten zur Verfügung:

### 1. Betriebsart:

Bei der ersten Betriebsart zum Senden von SMS-Nachrichten wird eine Textnachricht über die Eingabeeinrichtung 50 eingegeben. Dabei wird jedes eingegebene alphanumerische Zeichen von der Steuereinrichtung 40 erfasst und zunächst in der Speichereinrichtung 60 zwischengespeichert. Sobald die Texteingabe der Textnachricht vollständig abgeschlossen ist, prüft die Steuereinrichtung 40, wie viele Zeichen mittels der Eingabeeinrichtung 50 eingegeben und in dem Speicher 60 abgespeichert worden sind.

Überschreitet die Anzahl der eingegebenen Zeichen einen vorgegebenen Grenzwert von 160-dies ist die maximale Anzahl von Zeichen, die mit dem SMS-Standard pro SMS übertragen werden können -, so unterteilt die Steuereinrichtung die eingegebenen Zeichen in Zeichenblöcke, deren Zeichenzahl den vorgegebenen Grenzwert jeweils erreicht oder unterschreitet. Aus jedem der so gebildeten Zeichenblöcke werden dann SMS-Datenpakete bzw. SMS-Nachrichten gebildet, die an die Sende-/Empfangseinrichtung 30 übermittelt

Sende-/Empfangseinrichtung 30 werden aus den Datenpaketen anschließend Datensignale erzeugt, die mittels der Antenne 20 ausgesendet werden.

Bei der ersten Betriebsart wird also zunächst die vollständige Eingabe der kompletten Texnachricht abgewartet; erst anschließend kommt es zu einem Aufsplitten der eingegebenen Textnachricht in Zeichenblöcke, sofern die Anzahl der eingegebenen Zeichen eine durch den SMS-Standard vorgegebenen Grenzwert von 160 Zeichen überschreitet. Mit anderen Worten wird also erst nach der vollständigen Texteingabe mit dem Aussenden der Textnachricht begonnen.

### 2. Betriebsart zum Aussenden einer SMS-Nachricht:

Gemäß der zweiten Betriebsart prüft die Steuereinrichtung 40 während der Eingabe von alphanumerischen Zeichen einer SMS-Textnachricht, ob die Anzahl der bereits eingegebenen Zeichen die durch den SMS-Standard vorgegebene maximale Zeichenzahl von 160 erreicht bzw. überschritten hat. Sobald die Anzahl der eingegebenen alphanumerischen Zeichen 160 überträgt, bildet die Steuereinrichtung 40 aus dieser Gruppe von 160 alphanumerischen Zeichen einen separaten Zeichenblock. Aus diesem separaten Zeichenblock wird ein Datenpaket nach dem SMS-Standard bzw. eine SMS-Nachricht gebildet und es wird die SMS-Nachricht an die Sende-/Empfangseinrichtung 30 zum Aussenden-weitergeleitet.

In dieser Weise wird fortgefahren, bis alle Zeichen der Textnachricht vollständig eingegeben und ausgesendet worden sind.

Zusammengefasst wird bei der zweiten Betriebsart also mit dem Aussenden von Teilen der Textnachricht begonnen, noch bevor die vollständige Eingabe der kompletten SMS durch den Benutzer erfolgt ist. Auf diese Weise wird erreicht, dass der Empfänger der SMS-Textnachricht bereits schon den ersten Teil bzw. die ersten Teile einer SMS-Nachricht erhält, noch bevor die Eingabe der kompletten SMS vollständig abgeschlossen worden ist.

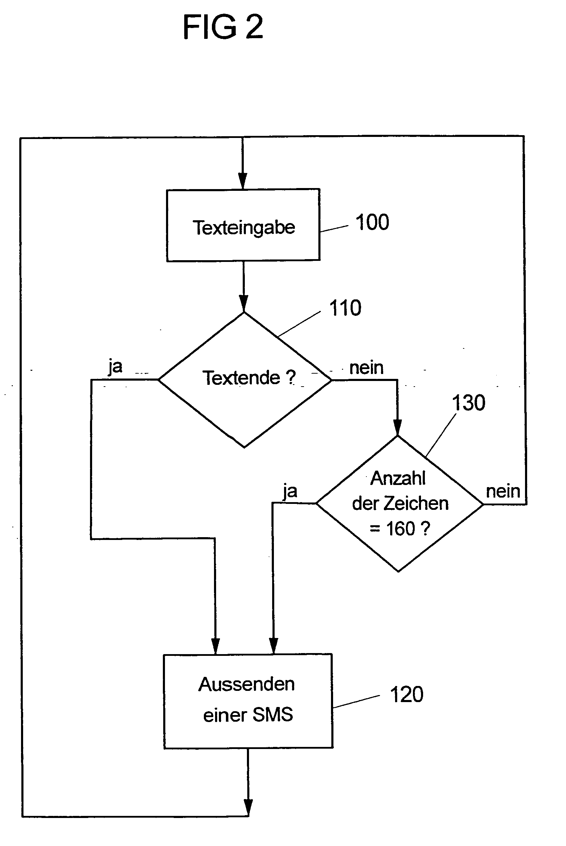

Die Figur 2 zeigt ein Flussdiagramm, das die zweite Betriebsart des Mobilfunkendgerätes 10 gemäß der Figur 1 bildlich darstellt. In einem ersten Verfahrensschritt 100 prüft das Mobilfunkendgerät 10, ob ein alphanumerisches Zeichen für eine Textnachricht eingegeben worden ist. Falls dies der Fall ist, wird in einem Schritt 110 geprüft, ob mit dem eingegebenen alphanumerischen Zeichen das Ende der Textnachricht bezeichnet wird. Falls dies der Fall ist, wird zum Verfahrensschritt 120 gesprungen, wonach sofort mit dem Aussenden der SMS begonnen wird.

Falls die Eingabe der SMS jedoch noch nicht abgeschlossen ist, so wird zu dem. Verfahrensschritt 130 übergegangen. In dem Verfahrensschritt 130 wird festgestellt, ob die Anzahl der eingegebenen alphanumerischen Zeichen die vorgegebene Grenze von 160 Zeichen erreicht hat. Falls dies der Fall ist, wird zum Verfahrensschritt 120 gesprungen und mit dem Aussenden einer SMS begonnen.

Falls die Anzahl der eingegebenen alphanumerischen Zeichen noch nicht 160 beträgt, so wird die Eingabe eines weiteren alphanumerischen Zeichens der Textnachricht abgewartet; es wird also zu dem Verfahrensschritt 100 zurückgesprungen.

In dieser Weise wird fortgefahren, bis die Textnachricht vollständig abgesandt worden ist.

In dem Mobilfunkendgerät 10 lässt sich benutzerseitig - beispielsweise im Rahmen der allgemeinen Systemeinstellungen - abspeichem, ob ein Absenden von SMS-Nachrichten nach der ersten oder der zweiten Betriebsart erfolgen soll. Bevorzugt handelt es sich bei dem Mobilfunkendgerät 10 um ein Mobilteil eines schnurlosen DECT-Telefons.

### Bezugszeichen

- 10: Mobilfunkendgerät
- 20: Antenne
- 30: Sende-/Empfangseinrichtung
- 40: Steuereinrichtung
- 50: Eingabeeinrichtung
- 60: Speicher
- A30: Antennenanschluss der Sende-/Empfangseinrichtung
- S30: Steueranschluss der Sende-/Empfangseinrichtung
- S40: Steueranschluss der Steuereinrichtung
- M40: Speicheranschluss der Steuereinrichtung
- E40: Eingabeanschluss der Steuereinrichtung 40
- 100-130: Verfahrensschritte

## Patentansprüche

1. Mobilfunkendgerät (10)
- mit einer Eingabeeinrichtung (50) zum Eingeben von aus alphanumerischen Zeichen bestehenden Textnachrichten,
- mit einer Steuereinrichtung (40), die aus den eingegebenen Zeichen Datenpakete nach einem vorgegebenen Datenpaketstandard erzeugt, und
- mit einer Sendeeinrichtung (30), die die Datenpakete aussendet,
**dadurch gekennzeichnet,**
**dass** die Steuereinrichtung (40) derart ausgestaltet ist, dass sie
- die eingegebenen Zeichen selbsttätig in Zeichenblöcke unterteilt, sofern die Anzahl der eingegebenen Zeichen eine durch den Datenpaketstandard vorgegebenen Grenzwert erreicht oder überschreitet, und
- selbsttätig aus jedem der so gebildeten Zeichenblöcke jeweils ein Datenpaket bildet:

2. Mobilfunkendgerät nach Anspruch 1, **dadurch gekennzeichnet, dass** die Eingabeeinrichtung (50) durch eine Tastatur, insbesondere durch die Nummerntastatur des Mobilfunkendgerätes, gebildet ist.

3. Mobilfunkendgerät nach Anspruch 1, **dadurch gekennzeichnet, dass** die Eingabeeinrichtung durch eine Schnittstelle gebildet ist, an die sich ein externes, alphanumerische Zeichen lieferndes Gerät anschließen lässt.

4. Mobilfunkendgerät nach einem der vorangehenden Ansprüche, **dadurch gekennzeichnet, dass** das Mobilfunkendgerät nach einem Datenpaketstandard arbeitet, bei dem der Grenzwert der Zeichenanzahl 160 beträgt.

5. Mobilfunkendgerät nach einem der vorangehenden Ansprüche, **dadurch gekennzeichnet, dass** das Mobilfunkendgerät nach dem SMS-Standard als Datenpaketstandard arbeitet und die gebildeten und ausgesandten Datenpakete SMS-Nachrichten sind.

6. Mobilfunkendgerät nach einem der vorangehenden Ansprüche, **dadurch gekennzeichnet, dass** das Mobilfunkendgerät derart ausgestaltet ist, dass es zunächst die vollständige Eingabe aller alphanumerischen Zeichen einer Textnachricht abwartet, bevor die daraus gebildeten Datenpakete ausgesendet werden.

7. Mobilfunkendgerät nach einem der vorangehenden Ansprüche 1 bis 5, **dadurch gekennzeichnet, dass** das Mobilfunkendgerät derart ausgestaltet ist, dass es nach der Eingabe einer dem Grenzwert entsprechenden Anzahl von alphanumerischen Zeichen aus diesen jeweils sofort ein Datenpaket nach dem vorgegebenen Datenpaketstandard erzeugt und dieses noch während der Eingabe weiterer Zeichen der Textnachricht aussendet.

8. Mobilfunkendgerät nach Anspruch 7, **dadurch gekennzeichnet, dass** das Mobilfunkendgerät derart ausgestaltet ist, dass es die Eingabe des Empfängers der Textnachricht anfordert, bevor mit der Eingabe der alphanumerischen Zeichen für die Textnachricht begonnen werden kann.

9. Mobilfunkendgerät nach einem der vorangehenden Ansprüche, **dadurch gekennzeichnet, dass** das Mobilfunkendgerät nach dem GSM-Funkstandard arbeitet.

10. Mobilfunkendgerät nach einem der vorangehenden Ansprüche 1 bis 8, **dadurch gekennzeichnet, dass** das Mobilfunkendgerät nach dem DECT-Funkstandard arbeitet.

11. Verfahren zum Erzeugen und Senden einer aus alphanumerischen Zeichen bestehenden Textnachricht, insbesondere unter Verwendung eines Mobilfunkendgerätes nach einem der vorangehenden Ansprüche, bei dem
- eine zu übersendende Textnachricht eingegeben wird,
- die Anzahl der eingegebenen Zeichen während der Eingabe der Textnachricht überprüft wird,
- aus den eingegebenen alphanumerischen Zeichen jeweils sofort ein Datenpaket gebildet und dieses ausgesandt wird, sobald die Anzahl der eingegebenen alphanumerischen Zeichen eine durch den Datenpaketstandard vorgegebenen Grenzwert erreicht,
- und das Bilden und Aussenden der Datenpakete in dieser Weise solange fortgesetzt wird, bis die gesamte Textnachricht vollständig ausgesendet worden ist.

12. Verfahren nach Anspruch 11, **dadurch gekennzeichnet, dass** zum Bilden der Datenpakete der SMS-Standard verwendet wird.

13. Verfahren nach einem der vorangehenden Ansprüche 11 oder 12, **dadurch gekennzeichnet, dass** zum Aussenden der gebildeten Datenpakete der GSM-Funkstandard verwendet wird.

14. Verfahren nach einem der vorangehenden Ansprüche 11 oder 12, **dadurch gekennzeichnet, dass** zum Aussenden der gebildeten Datenpakete der DECT-Fünkstaiidard verwendet wird.
